# EUROPÄISCHE PATENTANMELDUNG

(11) **EP 4 401 266 A1**
(43) Veröffentlichungstag der Anmeldung: **17.07.2024**
(21) Anmeldenummer: 23150887.0
(22) Anmeldetag: 10.01.2023
(51) Int. Cl.: H02J 3/36, H02J 1/10, H02J 1/00, H02J 1/14

(54) **SCHALTANLAGE UND VERFAHREN ZUM BETREIBEN EINER SCHALTANLAGE**

(71) Anmelder: Siemens Energy Global GmbH & Co. KG, 81739 München (DE)
(72) Erfinder: Westerweller, Thomas, 96135 Stegaurach (DE)

(57) **Zusammenfassung**

Die Erfindung betrifft eine Schaltanlage (1) für ein Hochspannungs-Gleichstrom-Übertragungsnetz (3), die eine erste Sammelschiene (11) aufweist, die mit jeweils einem Neutralanschluss (23) mehrerer Stromrichter (25) verbindbar ist. Die erste Sammelschiene (11) ist über einen ersten Schalter (17) mit einer zweiten Sammelschiene (12) verbunden. Die zweite Sammelschiene (12) ist mittels eines Schalters (27) mit einem ersten Pol (P1) oder mittels eines weiteren Schalters (28) mit einem zweiten Pol (P2) mindestens einer Hochspannungs-Gleichstrom-Übertragungsleitung (5) des Hochspannungs-Gleichstrom-Übertragungsnetzes (3) verbindbar. Die erste Sammelschiene (11) ist über einen zweiten Schalter (19) mit einer dritten Sammelschiene (13) verbunden. Die dritte Sammelschiene (13) ist mittels eines Schalters (29) mit mindestens einer metallischen Rückflussleitung (DMR) des Hochspannungs-Gleichstrom-Übertragungsnetzes (3) verbindbar.

## Beschreibung

Die Erfindung betrifft eine Schaltanlage für ein Hochspannungs-Gleichstrom-Übertragungsnetz und ein Verfahren zum Betreiben einer solchen Schaltanlage.

Es sind Hochspannungs-Gleichstrom-Übertragungsnetze in Planung, um elektrische Energie über große Entfernungen zu übertragen. Ein Hochspannungs-Gleichstrom-Übertragungsnetz weist eine Mehrzahl von Hochspannungs-Gleichstrom-Übertragungsleitungen auf, die jeweils einen ersten Pol und einen zweiten Pol aufweisen. Der erste Pol kann ein positiver Pol sein und der zweite Pol kann ein negativer Pol sein (oder umgekehrt). Da Ungleichmäßigkeiten (Asymmetrien) zwischen einem im ersten Pol fließenden Gleichstrom und einem im zweiten Pol fließenden Gleichstrom auftreten können, ist ein Rückflusspfad (Rückstrompfad) vorgesehen, der die an dem Hochspannungs-Gleichstrom-Übertragungsnetz anschließbaren Stromrichter verbindet. Dieser Rückflusspfad bildet einen Teil des Hochspannungs-Gleichstrom-Übertragungsnetzes. Da der Rückflusspfad in der Regel eine Spannung aufweist, deren Betrag wesentlich kleiner ist als der Betrag der an dem ersten Pol oder an dem zweiten Pol beim Normalbetrieb auftretenden Spannung, wird der Rückflusspfad auch als Neutralpfad oder Neutralverbindung bezeichnet.

Es gibt verschiedene Möglichkeiten, den Rückflusspfad zu realisieren. Eine erste Möglichkeit besteht darin, die Erde als Rückflusspfad zu verwenden. Dazu wird eine Erdelektrode eingesetzt, der Rückflussstrom wird über die Erde geleitet. Dies wird als "ground return" bezeichnet. Eine zweite Möglichkeit besteht darin, einen zusätzlichen metallischen Leiter als Rückflusspfad zu verwenden. Dieser metallische Leiter wird als "dedicated metallic return" (DMR) bezeichnet.

Eine dritte Möglichkeit besteht darin, einen Pol der Hochspannungs-Gleichstrom-Übertragungsleitung als Rückflusspfad zu verwenden, wenn dieser Pol aktuell nicht für die Übertragung des Polstroms benötigt wird (sogenannter monopolarer Betrieb). Dies wird als "high voltage metallic return" bezeichnet.

Während des Betriebs des Hochspannungs-Gleichstrom-Übertragungsnetzes besteht oft die Notwendigkeit, zwischen diesen verschiedenen Rückflusspfaden umzuschalten. Dazu werden Schalter benötigt, um den Rückflussstrom bei Bedarf von einem Rückflusspfad in einen anderen Rückflusspfad zu kommutieren. Diese Schalter werden an den Stellen des Hochspannungs-Gleichstrom-Übertragungsnetzes benötigt, an denen Stromrichter an das Hochspannungs-Gleichstrom-Übertragungsnetz anschließbar sind. Da an ein Hochspannungs-Gleichstrom-Übertragungsnetz in der Regel eine Mehrzahl von Stromrichtern angeschlossen werden sollen, dürfte der Aufwand für die Planung und Installation der Schalter erheblich sein.

Der Erfindung liegt die Aufgabe zugrunde, eine Schaltanlage für ein Hochspannungs-Gleichstrom-Übertragungsnetz und ein Verfahren zum Betreiben einer solchen Schaltanlage anzugeben, mit denen auch bei einer größeren Anzahl an Stromrichtern die Umschaltung zwischen den verschiedenen Rückflusspfaden vergleichsweise einfach und übersichtlich realisiert werden kann.

Diese Aufgabe wird erfindungsgemäß gelöst durch eine Schaltanlage und durch ein Verfahren nach den unabhängigen Patentansprüchen. Vorteilhafte Ausgestaltungen der Schaltanlage und des Verfahrens sind in den abhängigen Patentansprüchen angegeben.

Offenbart wird eine Schaltanlage für ein Hochspannungs-Gleichstrom-Übertragungsnetz,
- die eine erste Sammelschiene aufweist, die mit jeweils einem Neutralanschluss mehrerer Stromrichter verbindbar ist,
- die erste Sammelschiene über einen ersten Schalter mit einer zweiten Sammelschiene verbunden ist,
- die zweite Sammelschiene mittels eines Schalters mit einem ersten Pol oder mittels eines weiteren Schalters mit einem zweiten Pol mindestens einer Hochspannungs-Gleichstrom-Übertragungsleitung des Hochspannungs-Gleichstrom-Übertragungsnetzes verbindbar ist,
- die erste Sammelschiene über einen zweiten Schalter mit einer dritten Sammelschiene verbunden ist, und
- die dritte Sammelschiene mittels eines (zusätzlichen) Schalters mit mindestens einer metallischen Rückflussleitung des Hochspannungs-Gleichstrom-Übertragungsnetzes verbindbar ist.

Bei dieser Schaltanlage ist vorteilhaft, dass an die erste Sammelschiene jeweils der Neutralanschluss einer Mehrzahl von Stromrichtern angeschlossen werden kann. Dadurch kann für diese Mehrzahl von Stromrichtern jeweils der Neutralanschluss mit dem ersten Pol, mit dem zweiten Pol oder mit der metallischen Rückflussleitung verbunden werden.

Die Schaltanlage kann so ausgestaltet sein, dass
- ein Neutralsystem der Schaltanlage die erste Sammelschiene, die zweite Sammelschiene und die dritte Sammelschiene aufweist.

Dieses Neutralsystem braucht vorteilhafterweise nur für weniger hohe Spannungen ausgelegt zu sein als beispielsweise der erste Pol oder der zweite Pol.

Die Schaltanlage kann so ausgestaltet sein, dass
- die erste Sammelschiene einen ersten Abschnitt der Schaltanlage zum Verbinden der Schaltanlage mit Stromrichtern, insbesondere mit Neutralanschlüssen von Stromrichtern, bildet. Der erste Abschnitt kann auch zum Verbinden der Schaltanlage mit anderen Geräten, insbesondere mit Neutralanschlüssen von anderen Geräten, genutzt werden.

Die Schaltanlage kann so ausgestaltet sein, dass
- die zweite Sammelschiene einen zweiten Abschnitt der Schaltanlage zum Verbinden der Schaltanlage mit Polen von Hochspannungs-Gleichstrom-Übertragungsleitungen des Hochspannungs-Gleichstrom-Übertragungsnetzes bildet.

Die Schaltanlage kann so ausgestaltet sein, dass
- die dritte Sammelschiene einen dritten Abschnitt der Schaltanlage zum Verbinden der Schaltanlage mit metallischen Rückflussleitungen des Hochspannungs-Gleichstrom-Übertragungsnetzes bildet.

Die Schaltanlage ist also übersichtlich in drei verschiedene Abschnitte gegliedert, die jeweils verschiedene Funktionen erfüllen. Jeder Abschnitt kann mit einer Mehrzahl der jeweils genannten Bauteile (Stromrichter, erster Pol, zweiter Pol, metallische Rückflussleitung usw.) schaltbar verbunden sein.

Die Schaltanlage kann so ausgestaltet sein, dass
- die erste Sammelschiene mittels eines dritten Schalters (Erdschalters) mit einer Erdelektrode verbindbar ist. Die Erdelektrode ist vorteilhafterweise schaltbar mit der ersten Sammelschiene verbindbar bzw. verbunden, weil üblicherweise bei einer Schaltanlage nur eine einzige Erdelektrode benötigt wird, die den Polstrom führen kann (die also für einen vergleichsweise hohen Strom ausgelegt ist).

Die Schaltanlage kann so ausgestaltet sein, dass
- die erste Sammelschiene mittels eines vierten Schalters (Erdungsschalter) mit einer lokalen Erdung (lokale Erdelektrode) der Schaltanlage zum Zwecke einer Potentialanbindung (der Schaltanlage) verbindbar ist, insbesondere über eine Erdungsimpedanz verbindbar ist.

Die lokale Erdung der Schaltanlage ist vorteilhafterweise schaltbar mit der ersten Sammelschiene verbindbar bzw. verbunden, weil üblicherweise bei einer Schaltanlage nur eine einzige lokale Erdungsstelle vorgesehen ist. Im Unterschied zu der oben genannten Erdelektrode ist lokale Erdung nur für einen vergleichsweise geringen Strom ausgelegt. Dieser Strom ist insbesondere wesentlich geringer als der Strom, für den die Erdelektrode ausgelegt ist.

Die Schaltanlage kann so ausgestaltet sein, dass
- der erste Schalter, der zweite Schalter, der dritte Schalter und/oder der vierte Schalter jeweils als ein Leistungsschalter ausgestaltet ist. Diese Schalter können bei Bedarf einen fließenden Strom abschalten.

Offenbart wird weiterhin ein Verfahren zum Betreiben einer Schaltanlage für ein Hochspannungs-Gleichstrom-Übertragungsnetz,
- die eine erste Sammelschiene aufweist, die mit jeweils einem Neutralanschluss mehrerer Stromrichter verbindbar ist,
- die erste Sammelschiene über einen ersten Schalter mit einer zweiten Sammelschiene verbunden ist,
- die zweite Sammelschiene mittels eines Schalters mit einem ersten Pol oder mittels eines weiteren Schalters mit einem zweiten Pol mindestens einer Hochspannungs-Gleichstrom-Übertragungsleitung des Hochspannungs-Gleichstrom-Übertragungsnetzes verbindbar ist,
- die erste Sammelschiene über einen zweiten Schalter mit einer dritten Sammelschiene verbunden ist, und
- die dritte Sammelschiene mittels eines Schalters mit mindestens einer metallischen Rückflussleitung des Hochspannungs-Gleichstrom-Übertragungsnetzes verbindbar ist, wobei bei dem Verfahren
- der Neutralanschluss der Stromrichter mit dem ersten Pol oder dem zweiten Pol verbunden wird, indem der erste Schalter geschlossen wird, und
- der Neutralanschluss der Stromrichter mit der metallischen Rückflussleitung verbunden wird, indem der zweite Schalter geschlossen wird.

Das Verfahren kann so ablaufen, dass
- der Neutralanschluss der Stromrichter mit der Erdelektrode verbunden wird, indem ein dritter Schalter geschlossen wird.

Das Verfahren kann auch so ablaufen, dass
- der Neutralanschluss der Stromrichter mit der lokalen Erdung verbunden wird, indem ein vierter Schalter geschlossen wird.

Die Schaltanlage und das Verfahren weisen gleiche oder gleichartige Eigenschaften und/oder Vorteile auf.

Im Folgenden wird die Erfindung anhand eines Ausführungsbeispiels näher erläutert. Gleiche Bezugszeichen verweisen dabei auf gleiche oder gleich wirkende Elemente.

Dazu ist in der
- Figur: ein Ausführungsbeispiel einer Schaltanlage für ein Hochspannungs-Gleichstrom-Übertragungsnetz
dargestellt.

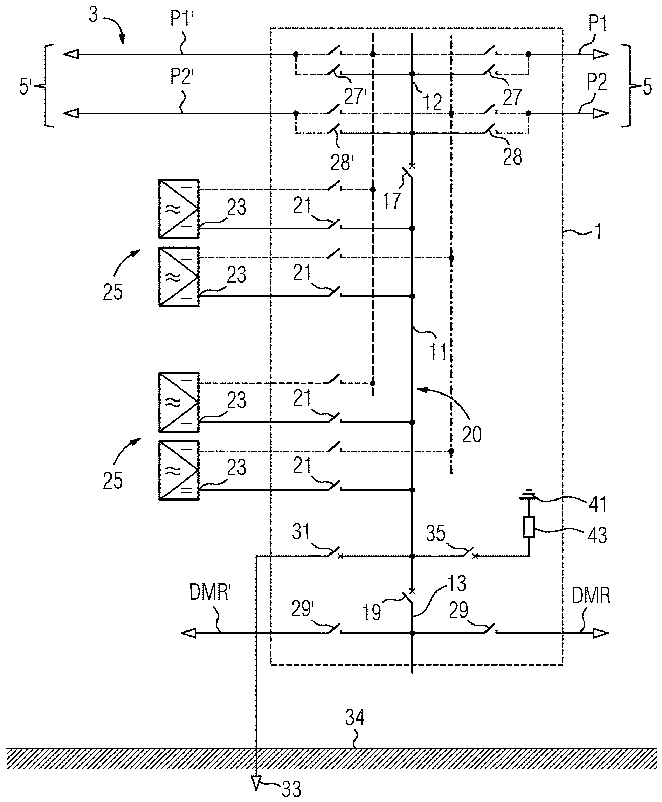

Die Figur zeigt ein Ausführungsbeispiel einer Schaltanlage 1 für ein Hochspannungs-Gleichstrom-Übertragungsnetz 3. Von dem Hochspannungs-Gleichstrom-Übertragungsnetz 3 ist eine Hochspannungs-Gleichstrom-Übertragungsleitung 5 dargestellt, die einen ersten Pol P1 (erste Polleitung P1) und einen zweiten Pol P2 (zweite Polleitung P2) aufweist. Es handelt sich also um ein bipolares Hochspannungs-Gleichstrom-Übertragungsnetz 3.

Außerdem ist eine weitere Hochspannungs-Gleichstrom-Übertragungsleitung 5` des bipolaren Hochspannungs-Gleichstrom-Übertragungsnetzes 3 dargestellt, die einen ersten Pol P1' und einen zweiten Pol P2' aufweist. Das Hochspannungs-Gleichstrom-Übertragungsnetz 3 weist darüber hinaus noch weitere Hochspannungs-Gleichstrom-Übertragungsleitungen auf, die aber in der Figur nicht dargestellt sind.

Die Schaltanlage 1 weist eine erste Sammelschiene 11, eine zweite Sammelschiene 12 und eine dritte Sammelschiene 13 auf. Die erste Sammelschiene 11 ist über einen ersten Schalter 17 mit der zweiten Sammelschiene 12 verbunden. Die erste Sammelschiene 11 ist außerdem über einen zweiten Schalter 19 mit der dritten Sammelschiene 13 verbunden.

Die erste Sammelschiene 11 ist über jeweils einen Schalter 21 (der als ein Trennschalter 21 ausgestaltet ist) mit den Neutralanschlüssen 23 von zwei bipolaren Stromrichtern 25 verbindbar bzw. schaltbar verbunden. Dabei weist jeder der bipolaren Stromrichter 25 zwei Teil-Stromrichter auf, die jeweils einen Neutralanschluss 23 aufweisen. Die Neutralanschlüsse 23 der beiden Teil-Stromrichter können mittels der Schaltanlage 1 elektrisch miteinander verbunden werden. Dies erfolgt insbesondere, indem die den Neutralanschlüssen jeweils zugeordneten Trennschalter 21 geschlossen werden. Die erste Sammelschiene 11 bildet also einen ersten Abschnitt der Schaltanlage 1 zum Verbinden der Schaltanlage 1 mit Stromrichtern 25, insbesondere mit den Neutralanschlüssen 23 der Stromrichter 25. Der erste Abschnitt kann aber auch zum Verbinden der Schaltanlage 1 mit anderen Geräten, insbesondere mit Neutralanschlüssen von anderen Geräten, genutzt werden.

Die erste Sammelschiene 11 ist außerdem mittels eines dritten Schalters 31 (Erdschalter 31) mit einer Erdelektrode 33 verbindbar bzw. schaltbar verbunden. Die Erdelektrode 33 ermöglicht einen Stromfluss über die Erde 34. Mittels eines vierten Schalters 35 (Erdungsschalter 35) ist die erste Sammelschiene 11 mit einer lokalen Erdung 41 der Schaltanlage 1 zum Zwecke einer Potentialanbindung der Schaltanlage an das Erdpotential verbindbar bzw. schaltbar verbunden. Die Anbindung der ersten Sammelschiene 11 an das Erdpotential 41 erfolgt insbesondere über eine Erdungsimpedanz 43.

Die zweite Sammelschiene 12 ist über einen Schalter 27 (Trennschalter 27) mit dem ersten Pol P1 und mittels eines weiteren Schalters 28 (Trennschalter 28) mit dem zweiten Pol P2 der Hochspannungs-Gleichstrom-Übertragungsleitung 5 des Hochspannungs-Gleichstrom-Übertragungsnetzes 3 verbindbar bzw. schaltbar verbunden. In gleicher Weise ist die zweite Sammelschiene 12 über einen weiteren Schalters 27` (Trennschalter 27') mit dem ersten Pol P1' und mittels eines weiteren Schalters 28` (Trennschalter 28') mit dem zweiten Pol P2` der weiteren Hochspannungs-Gleichstrom-Übertragungsleitung 5` des Hochspannungs-Gleichstrom-Übertragungsnetzes 3 verbindbar bzw. schaltbar verbunden. Die zweite Sammelschiene bildet also einen zweiten Abschnitt der Schaltanlage 1 zum Verbinden der Schaltanlage 1 mit Polen P1, P2, P1' und P2` der Hochspannungs-Gleichstrom-Übertragungsleitungen 5, 5' des Hochspannungs-Gleichstrom-Übertragungsnetzes 3.

Die dritte Sammelschiene 13 ist mittels eines (zusätzlichen) Schalters 29 mit einer ersten metallischen Rückflussleitung DMR des Hochspannungs-Gleichstrom-Übertragungsnetzes 3 und mittels eines weiteren Schalters 29` mit einer zweiten metallischen Rückflussleitung DMR' des Hochspannungs-Gleichstrom-Übertragungsnetzes 3 verbindbar bzw. schaltbar verbunden. Die dritte Sammelschiene 13 bildet also einen dritten Abschnitt der Schaltanlage 1 zum Verbinden der Schaltanlage 1 mit metallischen Rückflussleitungen DMR bzw. DMR' des Hochspannungs-Gleichstrom-Übertragungsnetzes 3.

Der erste Schalter 17, der zweite Schalter 19, der dritte Schalter 31 und/oder der vierte Schalter 35 sind beispielsweise jeweils als ein Leistungsschalter ausgestaltet. Die übrigen Schalter der Schaltanlage sind im Beispiel als Trennschalter ausgestaltet.

Die erste Sammelschiene 11, die zweite Sammelschiene 12 und die dritte Sammelschiene 13 sind Bestandteile eines Neutralsystems 20 der Schaltanlage 1. Das Neutralsystem 20 ist mittels durchgezogener Linien dargestellt. Das Neutralsystem weist insbesondere auch die Schalter 17, 19, 27, 27', 28, 28', 29, 29', 31 und 35 auf. Mittels strichlierter Linien und mittels Strich-Punkt-Linien ist derjenige Teil der Schaltanlage dargestellt, der ein Hochspannungssystem der Schaltanlage bildet. Dieser Teil der Schaltanlage weist nicht näher bezeichnete Schalter auf, mit denen Polanschlüsse (Hochspannungsanschlüsse) der Stromrichter 25 mit den Polen P1, P1', P2 und/oder P2` der Hochspannungs-Gleichstrom-Übertragungsleitungen 5, 5` verbindbar bzw. schaltbar verbunden sind.

Wenn beispielsweise die mit Neutralanschlüssen 23 der Stromrichter 25 verbundene erste Sammelschiene 11 mit dem ersten Pol P1 verbunden werden soll, dann wird zuerst der Schalter 27 geschlossen. Gegebenenfalls können auch die Schalter 27', 28 und/oder 28` geschlossen werden, falls die entsprechenden Pole P1', P2 bzw. P2' auch mit der zweiten Sammelschiene 12 verbunden werden sollen. Danach wird der (ursprünglich geöffnete) erste Schalter 17 geschlossen (und dadurch die erste Sammelschiene 11 mit der zweiten Sammelschiene 12 elektrisch verbunden). Falls der Schalter 19 oder der Schalter 31 geschlossen ist, wird dieser Schalter jeweils geöffnet. Daraufhin kommutiert ein gegebenenfalls bereits fließender Rückstrom in den ersten Pol P1 (und gegebenenfalls auch in die anderen Pole P1', P2 bzw. P2`).

Wenn zum Beispiel die mit Neutralanschlüssen 23 der Stromrichter 25 verbundene erste Sammelschiene 11 mit der metallischen Rückflussleitung DMR verbunden werden soll, dann läuft dieser Vorgang ähnlich ab. Zuerst wird der Schalter 29 geschlossen. Gegebenenfalls kann auch der Schalter 29` geschlossen werden, falls die metallische Rückflussleitung DMR' auch mit der dritten Sammelschiene 13 verbunden werden soll. Danach wird der (ursprünglich geöffnete) zweite Schalter 19 geschlossen (und dadurch die erste Sammelschiene 11 mit der dritten Sammelschiene 13 elektrisch verbunden). Falls der Schalter 17 oder der Schalter 31 geschlossen ist, wird dieser Schalter jeweils geöffnet. Daraufhin kommutiert ein gegebenenfalls bereits fließender Rückstrom in die metallische Rückflussleitung DMR (und gegebenenfalls auch in die andere metallische Rückflussleitung DMR').

In gleichartiger Weise wird der Neutralanschluss 23 der Stromrichter 25 mit der Erdelektrode 33 verbunden, indem der dritte Schalter 31 geschlossen wird. Ebenso wird der Neutralanschluss 23 der Stromrichter 25 mit der lokalen Erdung 41 zur Potentialanbindung verbunden, indem der vierte Schalter 35 geschlossen wird.

Die beschriebene Schaltanlage 1 ist vorteilhafterweise einfach erweiterbar für eine nahezu beliebige Anzahl von Hochspannungs-Gleichstrom-Übertragungsleitungen und metallischen Rückflussleitungen eines Hochspannungs-Gleichstrom-Übertragungsnetzes. Ebenso kann bedarfsweise eine verschiedene Anzahl anderer Geräte an die Schaltanlage angeschlossen werden. Die Schaltanlage kann flexibel an unterschiedliche Anforderungen angepasst werden, beispielsweise sei Folgendes genannt:
- Eine nahezu beliebige Anzahl von Polen (Polleitungen) kann als eine (metallische) Rückflussleitung konfiguriert werden, ohne dass die Funktion von anderen Polen des Hochspannungs-Gleichstrom-Übertragungsnetzes beeinflusst wird.
- Die Erde kann als Rückflusspfad verwendet werden (mittels einer Erdelektrode), ohne dass die Funktion der metallischen Rückflussleitung des Hochspannungs-Gleichstrom-Übertragungsnetzes beeinträchtigt wird oder dass die metallische Rückflussleitung mit der Erdelektrode elektrisch verbunden zu werden braucht.
- Änderungen des Rückflusspfades können durchgeführt werden unabhängig von der Konfiguration der mit der Schaltanlage elektrisch verbindbaren / anschließbaren Elemente (wie zum Beispiel Stromrichter).

Die Schaltanlage ist modular aufgebaut derart, dass im Einzelfall nicht benötigte Elemente (beispielsweise könnte in einem Teil eines Hochspannungs-Gleichstrom-Übertragungsnetzes zunächst keine metallische Rückflussleitung benötigt werden) zunächst weggelassen werden können, ohne dass der grundsätzliche Aufbau der Schaltanlage geändert zu werden braucht. Solche zunächst nicht benötigten Elemente können daher später einfach und kostengünstig nachgerüstet werden. Die Schaltanlage und das Verfahren sind vorteilhafterweise auch kompatibel mit bekannten Fehlerklärungsverfahren.

Die Schaltanlage ist einfach mit einer sogenannten Doppelstromschienenanordnung erweiterbar. Bei einer solchen Doppelstromschienenanordnung sind die Stromschienen der Schaltanlage (insbesondere alle Stromschienen der Schaltanlage) zweifach ausgeführt; die einzelnen Elemente (Stromrichter o.ä.) können dann wahlweise jeweils mit einer der beiden Stromschienen verbunden werden. Dies vergrößert die Flexibilität der Schaltanlage noch weiter. Die Doppelstromschienenanordnung ist insbesondere dann vorteilhaft, wenn von der Schaltanlage mehr als ein Element (Stromrichter o.ä.) mit einer Hochspannungs-Gleichstrom-Übertragungsleitung verbunden werden soll.

### Bezugszeichen:

- 1: Schaltanlage
- 3: Hochspannungs-Gleichstrom-Übertragungsnetz
- 5, 5`: Hochspannungs-Gleichstrom-Übertragungsleitung
- 11: erste Sammelschiene
- 12: zweite Sammelschiene
- 13: dritte Sammelschiene
- 17: erster Schalter
- 19: zweiter Schalter
- 20: Neutralsystem
- 21: Schalter
- 23: Neutralanschluss
- 25: Stromrichter
- 27, 27`: Schalter
- 28, 28`: Schalter
- 29, 29`: Schalter
- 31: dritter Schalter
- 33: Erdelektrode
- 34: Erde
- 35: vierter Schalter
- 41: lokale Erdung
- 43: Erdungsimpedanz

- P1, P1': erster Pol
- P2, P2`: zweiter Pol
- DMR: metallische Rückflussleitung

## Patentansprüche

1. Schaltanlage (1) für ein Hochspannungs-Gleichstrom-Übertragungsnetz (3),
- die eine erste Sammelschiene (11) aufweist, die mit jeweils einem Neutralanschluss (23) mehrerer Stromrichter (25) verbindbar ist,
- die erste Sammelschiene (11) über einen ersten Schalter (17) mit einer zweiten Sammelschiene (12) verbunden ist,
- die zweite Sammelschiene (12) mittels eines Schalters (27) mit einem ersten Pol (P1) oder mittels eines weiteren Schalters (28) mit einem zweiten Pol (P2) mindestens einer Hochspannungs-Gleichstrom-Übertragungsleitung (5) des Hochspannungs-Gleichstrom-Übertragungsnetzes (3) verbindbar ist,
- die erste Sammelschiene (11) über einen zweiten Schalter (19) mit einer dritten Sammelschiene (13) verbunden ist, und
- die dritte Sammelschiene (13) mittels eines Schalters (29) mit mindestens einer metallischen Rückflussleitung (DMR) des Hochspannungs-Gleichstrom-Übertragungsnetzes (3) verbindbar ist.

2. Schaltanlage nach Anspruch 1
**dadurch gekennzeichnet, dass**
- ein Neutralsystem (20) der Schaltanlage (1) die erste Sammelschiene (11), die zweite Sammelschiene (12) und die dritte Sammelschiene (13) aufweist.

3. Schaltanlage nach Anspruch 1 oder 2
**dadurch gekennzeichnet, dass**
- die erste Sammelschiene (11) einen ersten Abschnitt der Schaltanlage (1) zum Verbinden der Schaltanlage (1) mit Stromrichtern (25), insbesondere mit Neutralanschlüssen (23) von Stromrichtern (25), bildet.

4. Schaltanlage nach einem der vorhergehenden Ansprüche, **dadurch gekennzeichnet, dass**
- die zweite Sammelschiene (12) einen zweiten Abschnitt der Schaltanlage (1) zum Verbinden der Schaltanlage (1) mit Polen (P1, P2, P1', P2') von Hochspannungs-Gleichstrom-Übertragungsleitungen (5, 5') des Hochspannungs-Gleichstrom-Übertragungsnetzes (3) bildet.

5. Schaltanlage nach einem der vorhergehenden Ansprüche, **dadurch gekennzeichnet, dass**
- die dritte Sammelschiene (13) einen dritten Abschnitt der Schaltanlage (1) zum Verbinden der Schaltanlage (1) mit metallischen Rückflussleitungen (DMR) des Hochspannungs-Gleichstrom-Übertragungsnetzes (3) bildet.

6. Schaltanlage nach einem der vorhergehenden Ansprüche, **dadurch gekennzeichnet, dass**
- die erste Sammelschiene (11) mittels eines dritten Schalters (31) mit einer Erdelektrode (33) verbindbar ist.

7. Schaltanlage nach einem der vorhergehenden Ansprüche, **dadurch gekennzeichnet, dass**
- die erste Sammelschiene (11) mittels eines vierten Schalters (35) mit einer lokalen Erdung (41) der Schaltanlage (1) zum Zwecke einer Potentialanbindung verbindbar ist, insbesondere über eine Erdungsimpedanz (43) verbindbar ist.

8. Schaltanlage nach einem der vorhergehenden Ansprüche, **dadurch gekennzeichnet, dass**
- der erste Schalter (17), der zweite Schalter (19), der dritte Schalter (31) und/oder der vierte Schalter (35) jeweils als ein Leistungsschalter ausgestaltet ist.

9. Verfahren zum Betreiben einer Schaltanlage (1) für ein Hochspannungs-Gleichstrom-Übertragungsnetz (3),
- die eine erste Sammelschiene (11) aufweist, die mit jeweils einem Neutralanschluss (23) mehrerer Stromrichter (25) verbindbar ist,
- die erste Sammelschiene (11) über einen ersten Schalter (17) mit einer zweiten Sammelschiene (12) verbunden ist,
- die zweite Sammelschiene (12) mittels eines Schalters (27) mit einem ersten Pol (P1) oder mittels eines weiteren Schalters (28) mit einem zweiten Pol (P2) mindestens einer Hochspannungs-Gleichstrom-Übertragungsleitung (5) des Hochspannungs-Gleichstrom-Übertragungsnetzes (3) verbindbar ist,
- die erste Sammelschiene (11) über einen zweiten Schalter (19) mit einer dritten Sammelschiene (13) verbunden ist, und
- die dritte Sammelschiene (13) mittels eines Schalters (29) mit mindestens einer metallischen Rückflussleitung (DMR) des Hochspannungs-Gleichstrom-Übertragungsnetzes (3) verbindbar ist, wobei bei dem Verfahren
- der Neutralanschluss (23) der Stromrichter (25) mit dem ersten Pol (P1) oder dem zweiten Pol (P2) verbunden wird, indem der erste Schalter (17) geschlossen wird, und
- der Neutralanschluss (23) der Stromrichter (25) mit der metallischen Rückflussleitung (DMR) verbunden wird, indem der zweite Schalter (19) geschlossen wird.

10. Verfahren nach Anspruch 9,
**dadurch gekennzeichnet, dass**
- der Neutralanschluss (23) der Stromrichter (25) mit der Erdelektrode (33) verbunden wird, indem ein dritter Schalter (31) geschlossen wird.

11. Verfahren nach Anspruch 9 oder 10,
**dadurch gekennzeichnet, dass**
- der Neutralanschluss (23) der Stromrichter (25) mit der lokalen Erdung (41) verbunden wird, indem ein vierter Schalter (35) geschlossen wird.
